Europäisches Patentamt

European Patent Office

Office européen des brevets

(19)

(11) Numéro de publication: **0 211 719 B1**

(12) **FASCICULE DE BREVET EUROPEEN**

(45) Date de publication du fascicule du brevet:
23.05.90

(51) Int. Cl.⁵: **F16D 55/22, F16D 55/02**

(21) Numéro de dépôt: **86401470.9**

(22) Date de dépôt: **02.07.86**

(54) **Ensemble de patin de friction équipé d'un ressort anti-bruit pour frein à disque.**

(30) Priorité: **31.07.85 FR 8511686**

(43) Date de publication de la demande:
**25.02.87 Bulletin 87/9**

(45) Mention de la délivrance du brevet:
**23.05.90 Bulletin 90/21**

(84) Etats contractants désignés:
**BE DE GB IT NL**

(56) Documents cités:
**DE-A- 2 334 232**
**FR-A- 2 288 911**
**FR-A- 2 433 676**
**FR-A- 2 436 288**
**GB-A- 2 142 394**

(73) Titulaire: **BENDIX France, 126, rue de Stalingrad,
F-93700 Drancy(FR)**

(72) Inventeur: **Guineau, Jacques, 5, avenue Victor Hugo,
F-92700 Colombes(FR)**

(74) Mandataire: **Lejet, Christian et al, BENDIX FRANCE
Division Technique Service Brevets Bendix
Europe 126 rue de Stalingrad, F-93700 Drancy(FR)**

ACTORUM AG

**Description**

L'invention concerne un ensemble de patin de friction pour frein à disque comportant un étrier, cet ensemble comprenant:

– une plaque porte-garniture présentant une protubérance centrale pourvue d'une ouverture de montge de ressort;

– une garniture de friction fixée à la plaque porte-garniture;

– un ressort fil anti-bruit comportant une partie centrale de montage engagée dans l'ouverture de montage, et à partir de laquelle s'étendent en porte-à-faux sensiblement symétriquement, deux ailes latérales constituées chacune par un cadre oblong formé par un brin continu replié comportant deux branches longitudinales parallèles et fermé centralement par des portions transversales parallèles des brins des ailes traversant l'ouverture.

Un ensemble de ce type est décrit dans le document FR-A 2 288 911.

La présente invention a pour objet de proposer un ensemble du type considéré, de structure robuste, de faibles coûts de fabrication et garantissant, pour chaque aile, une force élastique d'appui calibrée, éventuellement importante, et constante dans le temps.

Selon l'invention, chaque aile présente une portion d'extrémité extérieure coudée pour ménager un angle d'appui sur une surface correspondante de la voute de l'étrier, garantissant une force élastique d'appui prédéterminée et durable.

La présente invention a pour autre objet de proposer un ensemble tel que défini ci-dessus, à montage et démontage aisés, et garantissant, non seulement un positionnement correct relatif mais également un verrouillage en position du ressort sur la plaque porte-garniture, sans affecter les caractéristiques propres du ressort.

Selon une autre caractéristique de l'invention, les ailes comportent, d'un même côté, des premières branches se raccordant continuellement l'une à l'autre, par une portion de pont centrale, les portions transversales centrales se prolongeant à repliement vers l'extérieur autour de cette portion de pont centrale pour former des pattes d'extrémité, tandis que, de l'autre côté, chacune des secondes branches se raccorde à la portion transversale centrale correspondante par une boucle s'étendant vers l'extérieur dans un même plan que les secondes branches, de manière à verrouiller en position le ressort.

De préférence, les portions transversales centrales s'étendent dans la direction des pattes d'extrémité suivant un angle déterminé par rapport à un plan parallèle au plan des branches d'extrémité reliant les branches longitudinales parallèles.

D'autres caractéristiques et avantages de la présente invention ressortiront de la description suivante de modes de réalisation, donnés à titre illustratif mais nullement limitatif, faite en relation avec les dessins annexés, sur lesquels:

– la Figure 1 est une vue de face d'un premier mode de réalisation d'un ensemble de patin de friction équipé d'un ressort anti-bruit selon l'invention;

– la Figure 2 est une vue en coupe suivant le plan de coupe.

– la Figure 3 est une vue du dessus de l'ensemble de la Figure 1 ;

– la Figure 4 est une vue en perspective du ressort anti-bruit du mode de réalisation des Figures 1 à 3 ;

– les Figures 5 à 7 sont des vues partielles, correspondant aux Figures 1, 2 et 4, d'un second mode de réalisation de l'invention ; et

– la Figure 8 est une vue analogue à la Figure 5 montrant une variante du second mode de réalisation.

Dans la description qui va suivre, les éléments identiques ou analogues portent les mêmes chiffres de référence, éventuellement indicés.

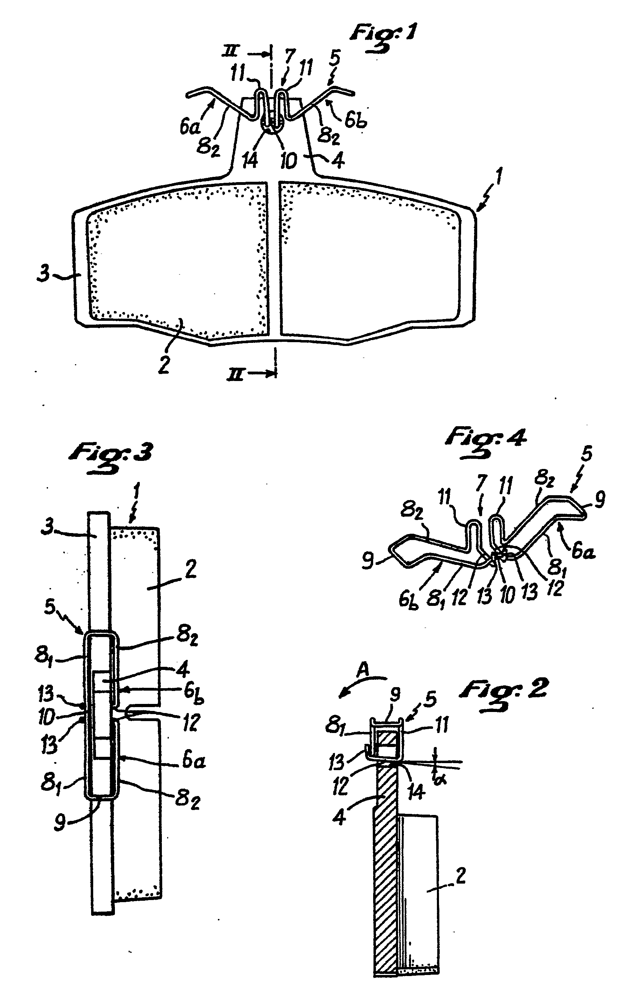

On a représenté sur la Figure 1 un ensemble équipé d'un patin de friction, désigné généralement par la référence 1, comportant une garniture de friction 2 fixée sur une plaque porte-garniture 3 pourvue typiquement d'une protubérance centrale 4, non revêtue du revêtement de friction, et sur laquelle est monté le ressort anti-bruit, désigné généralement par la référence 5.

Comme on le voit mieux sur les Figures 2 à 4, le ressort 5 est réalisé à partir d'une longueur continue d'un fil métallique élastique conformé et replié sur lui-même pour constituer, de façon générale, deux ailes $6_a$ et $6_b$ identiques, s'étendant symétriquement en porte à faux à partir d'une partie centrale de montage désignée généralement par la référence 7. Conformément à l'invention, chaque aile $6_a, 6_b$ est constituée sous la forme d'un cadre oblong à deux branches longitudinales parallèles $8_1$ et $8_2$ reliées, à leurs extrémités opposées à la partie centrale de montage 7, par une branche transversale d'extrémité 9. Les premières branches $8_1$ d'un même côté des ailes $6_a$ et $6_b$ se raccordent continuement l'une à l'autre par une portion de pont centrale légèrement arquée 10, ces premières branches $8_1$ et la portion de pont centrale 10 étant coplanaires. Les secondes branches $8_2$ des ailes $6_a$ et $6_b$ se prolongent chacune intérieurement par une boucle en U 11. Les boucles 11 et les secondes branches $8_2$ s'étendent sensiblement dans un même plan parallèle au plan des premières branches $8_1$, les boucles 11 s'étendant dans la direction vers les extrémités des ailes $6_a, 6_b$ dans la direction du plan bissecteur du dièdre principal des ailes $6_a, 6_b$. Chaque boucle 11 se prolonge centralement par une portion transversale 12 parallèle à la branche transversale d'extrémité 9 et qui se termine à repliement vers l'extérieur autour de la portion de pont centrale 10 des branches $8_1$ par des pattes d'extrémité 13 s'étendant dans la même direction que les boucles 11, sensiblement parallèlement à ces dernières. Typiquement, comme on le voit bien sur les Figures 1 à 4, chaque branche $6_a, 6_b$ présente une portion d'extrémité extérieure coudée pour ménager un angle d'appui sur la surface correspondante de la voûte d'étrier de frein. Comme on le voit bien sur les Figures 2 et 3, la largeur des cadres des boucles $6_a$ $6_b$, définie par l'extension des branches 9 est légèrement supérieure à l'épaisseur de la plaque porte-garniture 3.

Dans le mode de réalisation représenté sur les Figures 1 à 4, les pattes d'extrémités 13 des portions transversales parallèles 12 du ressort ont une extension réduite, de l'ordre de 1,5mm, et la protubérance centrale 4 de la plaque porte-garniture 3 est pourvue d'un orifice traversant cylindrique 14 dimensionné de façon à permettre librement le passage des pattes d'extrémité 13. Pour le montage du ressort 5 sur la plaque porte-garniture 3, on présente le ressort au-dessus de la protubérance 4 en dégageant élastiquement les portions transversales centrales 12 de la portion de pont centrale 10 pour les engager dans l'orifice 14 après quoi, en continuant d'abaisser le ressort 5 et en le basculant dans le sens de la flèche A sur la Figure 2 le ressort 5 se verrouille automatiquement sur la protubérance 4, les pattes d'extrémité 13 recouvrant leur position à repliement autour de la portion de pont centrale 10 avec les boucles 11 formant zone d'appui contre la face correspondante de la protubérance 4, la portion de pont centrale 10 et les portions centrales adjacentes des premières branches $8_1$ formant zone de contre-appui avec l'autre face de la protubérance 4. Lors de la mise en place du patin dans le frein, la réaction des efforts exercés sur les ailes $6_a$ et $6_b$ est reprise, dans l'orifice 14, par les portions transversales 12 suivant un agencement équilibré en rotation dans le plan général de la plaque porte-garniture 3. Comme on le voit sur la Figure 2, les portions transversales centrales 12 s'étendent, dans la direction vers les pattes d'extrémité 13, suivant un angle α par rapport à un plan parallèle au plan des branches d'extrémité 9 pour assurer le basculement du ressort dans la direction de la flèche A lors de sa mise en place initiale sur la plaque porte-garniture.

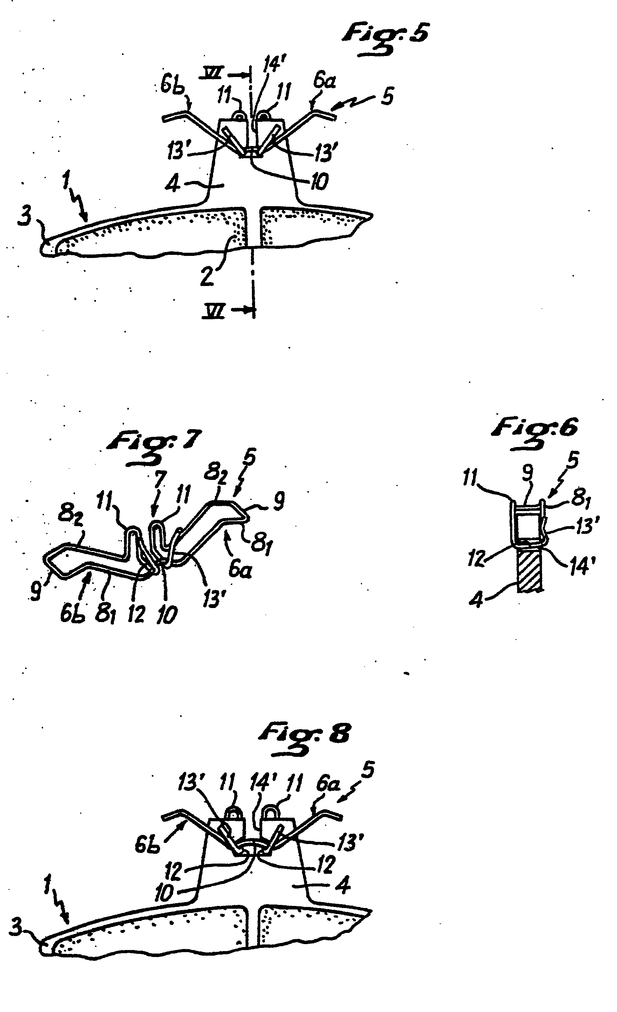

Le mode de réalisation représenté sur les Figures 5 à 7 est, dans ses grandes lignes, identique à celui qui vient d'être décrit en relation avec les Figures 1 à 4. Dans ce mode de réalisation, toutefois, l'orifice 14 dans la protubérance 4 de la plaque porte-garniture 3 est ici remplacé par une fente en T 14' débouchant dans le haut de la protubérance 4 et s'élargissant latéralement à sa partie inférieure. Cet agencement permet une mise en place du ressort 5 sur la protubérance 4 par simple insertion verticale dans la fente 14' en rapprochant élastiquement, pour ce faire, les deux portions transversales centrales parallèles 12 l'une de l'autre. Lorsque celles-ci atteignent l'extrémité inférieure élargie de la fente 14' elles se positionnent automatiquement dans les branches transversales de la fente en T 14' en prévenant ainsi une extraction accidentelle du ressort hors de cette dernière. Compte tenu de ce mode de mise en place, les pattes d'extrémités 13' ont ici une extension vers l'extérieur plus importante que dans le mode de réalisation des Figures 1 à 4. Les pattes d'extrémité 13' s'étendent ici sensiblement suivant la bissectrice entre la direction principale des ailes $6_a$ ou $6_b$ et de la boucle 11 correspondante. De plus, comme on le voit bien sur les Figures 6 et 7, les pattes d'extrémité 13' sont repliées vers l'intérieur, dans la direction vers les boucles 11, pour constituer un coude de pincement élastique de la protubérance 4 garantissant un verrrouillage et un positionnement corrects du ressort sur la plaque porte-garniture. Le mode de réalisation de la Figure 8 est en tous points identique à celui des Figures 5 à 7 si ce n'est que, pour faciliter la réalisation par découpage de la fente en T 14', celle-ci présente une hampe légèrement plus large se raccordant aux branches transversales par un profil arrondi, la distance au repos entre les portions transversales centrales parallèles 12 du ressort 5 étant élargie en conséquence.

## Revendications

1. Ensemble de patin de friction pour frein à disque comportant un étrier, ledit ensemble comprenant :
   – une plaque porte-garniture (3) présentant une protubérance centrale (4) pourvue d'une ouverture (14) de montage d'un ressort ;
   – une garniture de friction (2) fixée à ladite plaque (3) ; et
   – un ressort fil anti-bruit (5) comportant une partie centrale de montage (7) engagée dans ladite ouverture (14) de montage, et à partir de laquelle s'étendent en porte-à-faux sensiblement symétriquement, deux ailes latérales (6a, 6b) constituées chacune par un cadre oblong formé par un brin continu replié comportant deux branches longitudinales parallèles ($8_1$, $8_2$) et fermé centralement par des portions transversales parallèles (12) des brins des ailes traversant ladite ouverture, caractérisé en ce que chaque aile (6a, 6b) présente une portion d'extrémité extérieure coudée pour ménager un angle d'appui sur une surface correspondante de la voute dudit étrier, garantissant une force élastique d'appui prédéterminée et durable.

2. Ensemble selon la revendication 1, caractérisé en ce que les dites ailes (6a, 6b) comportent, d'un même côté, des premières branches ($8_1$) se raccordant continuement l'une à l'autre par une portion de pont centrale (10), les portions transversales centrales (12) se prolongeant à repliement vers l'extérieur autour de cette portion de pont centrale pour former des pattes d'extrémité (13), tandis que, de l'autre côté, chacune des secondes branches ($8_2$) se raccorde à la portion transversale centrale correspondante (12) par une boucle (11) s'étendant vers l'extérieur dans un même plan que les dites secondes branches ($8_2$), de manière à verrouiller en position le dit ressort (5).

3. Ensemble selon la revendication 2, caractérisé en ce que les dites portions transversales centrales (12) s'étendent dans la direction des pattes d'extrémité (13) suivant un angle déterminé par rapport à un plan parallèle au plan des branches d'extrémité (9) reliant les dites branches longitudinales parallèles ($8_1$, $8_2$).

## Claims

1. Friction pad assembly for a disc brake having a calliper, said assembly comprising:
   - a lining carrier plate (3) having a central projection (4) provided with a mounting opening for a spring (14);
   - a friction lining (2) fastened to said plate (3); and
   - an anti-noise wire spring (5) comprising a central mounting portion (7) which is engaged in said mounting opening (14), and from which two lateral arms (6a, 6b) extend essentially symmetrically in a cantilevered fashion, which are each constructed by a rectangular frame formed by a continuous folded strand having two parallel longitudinal branches (81, 82) and closed centrally by parallel transverse portions (12) of the strands of the arms passing through said opening, characterized in that each arm (6a, 6b) has an outer end portion bent to form a bearing angle on a corresponding surface of the arch of the said calliper, guaranteeing a predetermined and durable elastic bearing force.

2. Assembly according to Claim 1, characterized in that said arms (6a, 6b) comprise, on one side, first branches (81) which are joined to one another so as to be continuous by a central bridge portion (10), the central transverse portions (12) being extended by being folded outwards around this central bridge portion so as to form end fingers (13), whilst, on the other side, each of the second branches (82) is connected to the corresponding central transverse portion (12) by a loop (11) which extends outwards in the same plane as the said second branches (82), so as to lock the said spring (5) in position.

3. Assembly according to Claim 2, characterized in that said central transverse portions (12) extend in the direction of the end fingers (13) at a specific angle in relation to a plane parallel to the plane of the end branches (9) connecting said parallel longitudinal branches (81, 82).

## Patentansprüche

1. Reibungsbackengarnitur für Scheibenbremse mit einem Sattel, wobei diese Garnitur umfaßt:
   - eine Garniturplatte (3), die einen mit einer Öffnung (14) für den Einbau einer Feder versehenen zentralen Vorsprung (4) aufweist;
   - eine auf dieser Platte (3) befestigte Reibungsgarnitur (2); und
   - eine Antiratter-Drahtfeder (5) mit einem zentralen Einbauteil (7), das in dieser Einbauöffnung (14) steckt und von dem ab sich etwa symmetrisch überhängend zwei Seitenflügel (6a, 6b) erstrecken, von denen jeder aus einem länglichen Rahmen besteht, der aus einem durchgehenden gebogenen Drahtstück geformt ist, das zwei parallele Längsarme (81, 82) umfaßt und zentral durch parallele Querpartien (12) der Drahtstücke der diese Öffnung durchquerenden Flügel geschlossen ist, dadurch gekennzeichnet, daß jeder Flügel (6a, 6b) eine äußere gekrümmte Endpartie aufweist, um einen Stützwinkel auf einer entsprechenden Fläche des Bogens dieses Sattels anzubringen, der eine vorgegebene elastische und dauerhafte Auflage-Federkraft gewährleistet.

2. Garnitur nach Anspruch 1, dadurch gekennzeichnet, daß diese Flügel (6a, 6b) auf derselben Seite erste Arme (81) umfassen, die ohne Unterbrechung aneinander durch ein zentrales Brückenteil (10) anschließen, wobei sich die zentralen Querpartien (12) nach außen umbiegend um dieses zentrale Brückenteil herum verlängern, um Endstücke (13) zu bilden, während auf der anderen Seite jeder der zweiten Arme (82) an die entsprechende zentrale Querpartie (12) durch eine Schleife (11) anschließt, die sich nach außen hin in einer gleichen Ebene wie diese zweiten Arme (82) erstreckt, so daß diese Feder (5) in ihrer Stellung verriegelt wird.

3. Garnitur nach Anspruch 2, dadurch gekennzeichnet, daß diese mittleren Querpartien (12) sich in Richtung der Endstücke (13) unter einem Winkel erstrecken, der in Bezug auf eine Ebene festgelegt ist, die parallel zur Ebene der diese parallelen Längsarme (81, 82) verbindenden Endstücke (9) ist.

EP 0 211 719 B1

*Fig. 1*

*Fig. 3*

*Fig. 4*

*Fig. 2*

EP 0 211 719 B1

*Fig. 5*

*Fig. 7*

*Fig. 6*

*Fig. 8*